# EUROPEAN PATENT APPLICATION

(11) **EP 3 852 322 A1**
(43) Date of publication of application: **21.07.2021**
(21) Application number: 20152022.8
(22) Date of filing: 15.01.2020
(51) Int. Cl.: H04L 12/781, H04L 12/749, H04L 29/06, H04W 88/06

(54) **MOBILE RADIO AND METHOD FOR OPERATING A MOBILE RADIO**

(71) Applicant: Rohde & Schwarz GmbH & Co. KG, 81671 München (DE)
(72) Inventor: WENZEL, Dietmar, 81549 München (DE)
(74) Representative: Isarpatent

(57) **Abstract**

The present invention provides a mobile radio for tactical usage. The mobile radio may perform a radio communication for transmitting and receiving voice signals. Furthermore, the mobile radio may transmit and receive data packets of packet based data transmission. In particular, data packets may be routed between multiple connected different data networks. For this purpose, the encryption of the data packets may be adapted accordingly. Furthermore, the individual networks may be separated from each other. For example, separate network addresses may be provided to each of the connected networks.

## Description

### TECHNICAL FIELD

The present invention relates to a mobile radio, in particular to a mobile radio for tactical usage. The present invention further relates to a method for operating such a radio.

### BACKGROUND

Even so applicable in general to any mobile communication device, the present invention and its underlying problem will be hereinafter described in connection with a tactical application requiring voice communication and data exchange.

Radios, in particular mobile radios may be used for voice transmission between two or more communication partners. For example, a first radio may transmit voice signals of radio frequency signals, and the radio frequency signals may be received by a further radio.

Furthermore, data transmission may be performed by a network using wired or wireless communication links. For this purpose, the data may be transmitted by individual data packets, and each data packet may be transmitted through a data network from one node to another note. For this purpose, a network address may be used for each data packet, and each node may analyze this network address in order to forward the data packet through the network comprising multiple nodes.

In a tactical environment, radios may be used for establishing communication links. However, these radios usually only perform radio communications. In order to expand the functionality for data transmission, the radio has to be connected to a further device in order to decode and decrypt information of the transmitted signals. Furthermore, the additional devices may analyze the information in order to perform a routing of data packets through the networks.

Since separate devices are used for radio communication and data processing, in particular routing operations, data transmission in the field of tactical usage requires a complex hardware structure. In particular, the hardware structure for data transmission usually is limited to mobile devices, which have to be installed in vehicles or trucks.

Against this background, a problem addressed by the present invention is to provide a mobile radio for tactical usage, which can deal with both, radio communication and routing of data packets. In particular, the present invention aims to provide a mobile radio for tactical usage which can provide routing capabilities for multiple networks.

Accordingly, the present invention provides a mobile radio for tactical usage and a method for operating a mobile radio for tactical usage with the features of the independent claims. Further advantageous embodiments are subject-matter of the dependent claims.

According to a first aspect, a mobile radio for a tactical usage is provided. The mobile radio comprises a radio transceiver, a data interface, a cryptographic device and a router. The radio transceiver is configured to transmit and receive radio communications. In particular, the radio transceiver may establish radio communications with one or more communication partners. The data interface is configured to receive data packets from a number of at least two data networks. The data interface is further configured to transmit data packets to the number of at least two data networks. The cryptographic device is configured to decrypt information of received data packets. The cryptographic device is further configured to encrypt information of data to be transmitted by the data interface. The router is configured to apply a routing of data packets, in particular of data packets, which are received by the data interface. Especially, the router may be configured to apply a routing according to information of data packets. The router may be further available to each of the number of data networks by a different network address.

According to a further aspect, a method for operating a mobile radio, in particular a mobile radio for tactical usage is provided. The method comprises a step of establishing a radio communication with one or more communication partners. The radio communication may be established by a radio transceiver. The method further comprises a step of establishing a data communication. The data communication may be established by a data interface. In particular, establishing the data communication may comprise receiving data packets from a number of at least two data networks, and transmitting data packets to the number of at least two data networks. Further, the method comprises a step of routing data packets. In particular, the routing of the data packets may be performed according to information of the data packets. The routing may further provide different network addresses to each of the number of data networks. Further, the method comprises decrypting information of the received data packets. The method may also comprise a step of encrypting information of data packets, which are to be transmitted by the established data communication.

The present invention is based on the finding that voice communication by means of a radio and packet based data transmission may require separate devices. Thus, if a communication link of a radio shall be used for a packet based data transmission, it is necessary to couple the radio with the additional device for controlling the data transmission. Especially in a tactical environment, there exists no solution for a compact and efficient combination of a radio communication for voice transmission and a packet based data transmission.

Thus, the present invention takes into account this finding and aims to provide an improved solution for a mobile device for tactical usage, which can deal with both, radio communication for voice transmission and packet based data transmission, especially packet based data transmission for tactical usage.

For this purpose, a mobile radio is provided, wherein the radio comprises a radio transceiver for a radio communication with one or more communication partners in order to establish voice communications. Further to this, the radio comprises all required components for a data transmission, in particular a packet based data transmission. Especially, since a tactical usage may require encrypted data transmission, a cryptographic device is provided for decrypting and encrypting information of data packets. In particular, the cryptographic device may decrypt/encrypt at least the information of a data packet, which is necessary for routing the data packets through a data network. Accordingly, a routing of data packets through a tactical network can be realized.

By combining the radio transceiver for radio communications and the router for routing data packets in a single device, in particular in a mobile radio, such a device can be easily used and operated. It is not necessary to couple multiple devices, e.g. a radio device and a separate router for data transmission. Hence, failures due to an improper connection, broken cables or the like can be avoided. Further to this, by arranging all relevant components for voice communication and data transmission in a single device, such a single device can be easily moved around, which may be very important, especially for tactical usage. For example, a user may easily attach the mobile radio at his further equipment without the need of any additional cables or connections.

Further to this, the mobile radio may establish data connections with multiple data networks. For example, a first data connection may be established with a local tactical network, and a further data connection may be established with an additional network, e.g. the Internet, or a private are network (PAN). For example, the mobile radio may be connected to the further network by a mobile communication network such as GSM, UMTS, LTE, 5G, or any other wired or wireless communication network, e.g. WiFi or Bluetooth. In order to separate the multiple networks, the router of the mobile radio may be visible to each network by a separate network address. In particular, the network addresses may be in an appropriate format according to the respective network. For example, a network address in a tactical network may be different from a network address in a public network such as the Internet. Furthermore, the router may adapt any other required parameter such as transmission rate, packet header, packet length, etc. For example, the router may couple a public network with a relative high data rate and a large address space with a tactical network having a data rate, which is lower than the data rate of the public network and/or an address space, which is smaller than the address space of the public available network. Accordingly, the router may perform an appropriate conversion of all relevant parameters for a transition of data packets between the individual networks.

The data, in particular the data packets may be received from the data networks by the data interface in any appropriate manner. Even though the data may be received preferably by wireless transmission links, it may be also possible to couple the data interface to one or more of the data networks by a wired transmission link, for example by a Ethernet connection or the like. In case that the data transmission is performed by wireless transmission links, the data interface may comprise any kind of appropriate devices for establishing the respective communication links. For example, the data interface may comprise a communication module for establishing a communication in a mobile communication network such as GSM, UMTS, LTE, 5G or the like. However, any other kind of wireless communication, for example WiFi, Bluetooth etc. may be possible, too. In particular, it may be possible to use any kind of wireless communication, which may be used for tactical purposes. The data transmission may be performed by one or more radio frequency transceivers. In one possible embodiment, the radio transceiver which performs the radio communication of the voice signals may be also used for data transmission, at least for data transmission in one of the multiple data networks. However, it may be also possible that the radio transceiver only performs radio communication for voice signals and transmission of the signals to/from the related data networks is performed by separate transceivers.

The cryptographic device may be any kind of device for decoding/encoding data according to a specific cryptographic approach. The cryptographic device may decode data packets at least in part. Accordingly, the decoded information in the data packets may be used for routing purposes. For example, specific address data or the like may be provided in an encrypted form, and the relevant data have to be decrypted before performing an appropriate routing.

Furthermore, it may be also possible to change the encryption when data packets are routed from one data network to another. For example, the encryption in the tactical network may be different from an encryption in a public network or a private area network.

Further embodiments of the present invention are subject-matter of the further sub-claims and of the following description referring to the drawings.

According to an embodiment, the transceiver and the router are arranged in common housing of the mobile radio.

It is understood that the further components such as the data interface and the cryptographic device may be also arranged in the common housing of the mobile radio. Accordingly, all components for performing a transmission of voice signals by the radio communication and a packet based data transmission are included in a single device. Consequently, there is no need for an additional connection between multiple devices by cables or the like. Furthermore, the weight of the whole system may be also reduced by combining all components in a single housing.

In a possible embodiment, the mobile radio is a handheld device. In particular, the mobile radio may be a portable radio for tactical usage.

For example, the additional components for decrypting/encrypting the data and for routing the data packets may be additionally included in a housing of a handheld mobile radio. In particular, the term "handheld radio" may relate to all radio devices, which can be moved around. For example, a handheld radio may be a radio, which can be attached to an equipment carried by a user. For example, the handheld radio may be attached to a vest or the like. Accordingly, the mobile radio provides voice communication and data communication, and the mobile radio may be moved around by a single user. In particular, the mobile radio may be powered by a battery or the like.

In a possible embodiment, the data interface of the mobile radio is configured to establish a data transmission with at least one tactical network. In particular, the data interface may be configured to establish a data transmission with a tactical mesh network (TMESH).

A tactical network, in particular a tactical mesh network may be a network establishing direct communications between individual communication partners. Accordingly, no base stations or the like may be required in such a network. Furthermore, the tactical network may perform a communication, in particular a data communication with a relative low data rate. In particular, the data rate of a tactical network may be lower than a data rate of a public network such as the Internet. Furthermore, the tactical network may refer to a limited address space. Consequently, the address which is used for data transmission in a tactical network may be different from an address format used by a public network. However, it is understood that the tactical network may also differ by further properties such as packet size, transmission protocol or the like.

In a possible embodiment, the router of the mobile radio is configured to adapt a data rate of the data packets routed from one data network to another data network. Additionally or alternatively, the router may be configured to adapt a network address of the data packets routed from one data network to another data network.

Accordingly, the router may couple different types of networks. For example, the router may couple a tactical data network and a public network or a private area network. For this purpose, the router may adapt all required properties of the data packets when routing data packets from one network type to another network type.

In a possible embodiment, the data interface is configured to establish a data transmission with at least one time variable network.

A time variable network may be a network wherein the individual network nodes may change over time. For example, a spatial position of network nodes, i.e. communication partners, may change over the time. Furthermore, the number of network nodes in the time variable network may also change over the time. Accordingly, an additional node may be added at any point in time, or a network node may be removed.

In a possible embodiment, the router of the mobile radio may comprise a memory. The memory may be configured to store information of participants, data rates and/or error rates of transmissions in at least one of the connected data networks. Further, the router may be configured to apply the routing of the data packets based on the stored information.

For example, the router may continuously analyze the data packets in order to monitor the configuration of the connected data networks. Accordingly, the router may store all available or relevant information. This information can be taken into account when routing individual data packets. For example, the router may identify new network nodes. The router may further determine communication partners of network nodes in a network. Based on this information, the router may identify an appropriate route for transmitting data packets through the network. Furthermore, the router may monitor a data rate, for example a data rate for transmitting data between individual network nodes. Accordingly, this data rate may be also taken into account for routing data packets through a network. It is understood, that any other appropriate information may be also monitored, stored and taken into account for determining a route of data packets through a network. Furthermore, the router may also comprise a list of permissions, i.e. network nodes, which may receive and/or transmit data packets, or network nodes which may register within a specific network. However, any other kind of information may be also stored in a memory of the router and taken into account for routing purposes.

In a possible embodiment, the transceiver of the mobile radio is configured to establish voice communication with one or more communication partners. The voice communication may be performed, for example by an analogue or digital transmission of voice signals. In particular, the voice signals may be encrypted in any appropriate manner. In this way, confidential voice communication may be performed. The voice communication may be a specific communication between two well-defined communication partners. The voice communication may be also a broadcast of a radio communication to multiple communication partners, for example a number of two or more well-defined communication partners, or all communication partners within a transmission range of the transceiver.

In a possible embodiment, the data interface may comprise a number of two or more interface devices. Each interface device may be configured to establish a data communication within a specific data network.

The data interfaces may be, for example, interfaces for a wireless data communication. For example, the data communication may be performed by radio frequency signals. A data interface may be, for example, an interface for establishing a data connection in a mobile communication network such as GSM, UMTS, LTE, 5G or the like. An interface device may also establish a wireless communication by any other appropriate wireless communication scheme, for example WiFi, Bluetooth or any other standardized or property transmission scheme. However, the interface devices may be not limited only to wireless data interfaces. Moreover, it may be even possible to establish a wired transmission link, for example, by Ethernet, USB or the like.

In a possible embodiment, at least one of the interface devices may be configured to be connected to the Internet. More general, at least one interface device may be connected to a public network or a private area network.

In a possible embodiment, the data interface is configured to establish a wireless data connection with at least one of a number of data networks. As already mentioned above, any appropriate wireless communication scheme may be applied.

With the present it is therefore possible to perform a radio communication by a radio device for tactical purpose, wherein the radio device may further be used for data transmission. In particular, the radio device may provide routing functionality for routing data packets. The routing of the data packets may be not limited only to a single network, but also provide a routing of data packets between multiple networks. For this purpose, a router of the radio device may be accessible by each of the multiple networks by a different network address. In this way, a compact communication device is provided, which can perform both, voice transmission by radio communications and packet based data transmission. In particular, the packet based data transmission provides a routing of data packets within a tactical mesh network. Further, the packet based data transmission may provide a transmission of data packets between the tactical network and a further public network.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1:: shows a schematic block diagram of a mobile radio according to an embodiment;
- Fig. 2:: shows a schematic diagram of communication infrastructure with a mobile radio according to the embodiment;
- Fig. 3:: shows a schematic diagram of a further communication infrastructure with a mobile radio according to the embodiment; and
- Fig. 4:: shows a flow diagram of a method according to an embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

### DETAILED DESCRIPTION OF THE DRAWINGS

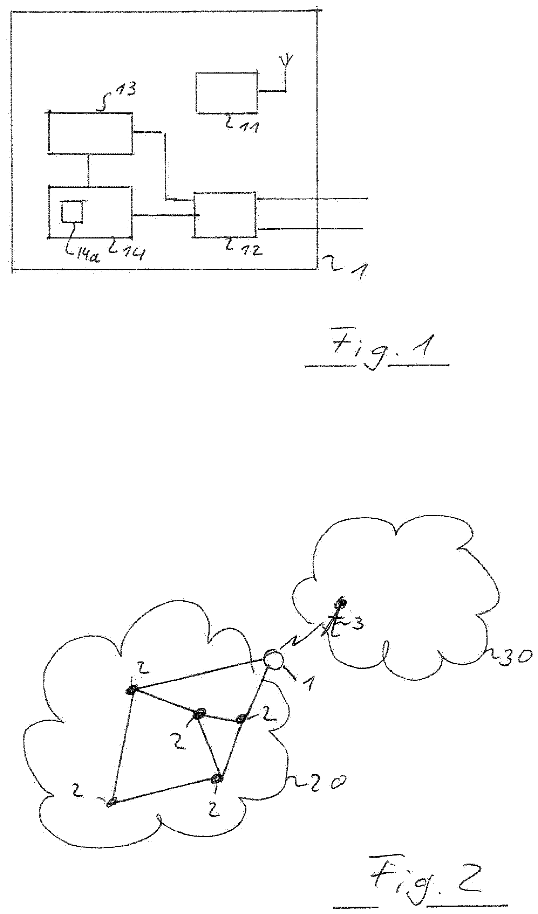

Figure 1 shows a block diagram of an embodiment of a mobile radio 1, in particular a mobile radio 1 for tactical usage. The mobile radio 1 comprises a radio transceiver 11. The radio transceiver 11 may transmit radio communications to one or more communication partners. Further, radio transceiver 11 may receive radio communications from one or more communication partners. In particular, the radio communication may relate to voice signals. For example, audio signals such as speech may be modulated on a radio frequency signal, and the modulated radio frequency signal may be emitted by an antenna. Further, radio frequency signals may be received by an antenna and provided to the transceiver. Accordingly, the transceiver may demodulate the received radio frequency signals in order to provide the audio signals to a user. The signals transmitted by radio transceiver 11 may be encrypted or encoded in any appropriate manner. In this way, the security of confidential radio communications can be improved.

Radio transmitter 11 may transmit the signals to one or more predetermined communication partners. For example, the signals may be encoded or encrypted such that only a specific communication partner can decrypt or decode the respective radio communications. Furthermore, any kind of indication may be added to the transmitted signals in order to specify one or more specific communication partners. Furthermore, transceiver 11 may transmit radio communications as a broadcast to any corresponding receiver in the transmission range of the radio transceiver 11.

Data interface 12 may be a data interface for receiving data packets and for transmitting data packets. In particular, data interface 12 may establish a data transmission with multiple data networks. For example, data interface 12 may be connected to the Internet, any kind of personal area network (PAN) and/or a tactical network, such as a tactical mesh network (TMSEH). Accordingly, network router 12 may perform data exchange with multiple connected networks. The data transmission may be performed by a packet based data transmission. For this purpose, each data packet may comprise a specific address indicating a target node of the data packet in the respective network. In order to separate/isolate the individual networks connected to data interface 12, mobile radio 1 provides a separate network address for each connected data network. This will be described in more detail below.

In order to control the data flow and to forward data packets to the desired target node, a routing of the data packets is required. For this purpose, mobile radio 1 may comprise a router 12, which provides routing capabilities. For example, router 14 may analyze a header of a received data packet, determine the target of the respective data packet and forward the data packet to a further node through data interface 12. For example, the data packet may be received from a node in one of the connected data networks and forwarded to another node in the same data network. However, it may be also possible to receive a data packet from a first data network and forward the received data packet to a second data network. In order to separate the individual data networks from each other, the mobile radio 1 may be visible to the individual data networks by different network addresses. In particular, the mobile radio 1 may be visible to each data network by an appropriate network address in an appropriate address format that fits the requirements of the respective data network. For example, the network address may be in a format of an IPV4 or IPV6 format. However, depending on the properties of the respective network, any other address format may be possible, too.

Accordingly, when transmitting data packets from one data network to another data network, router 14 may change the address or the address format of the respective data packet accordingly. Furthermore, router 14 may also adapt any other property of the data packet in line with the requirements of the respective data network. For example, a packet length, a header of a packet or any other property may be adapted accordingly. Furthermore, the individual data networks connected to data interface 12 may transmit the data with different data rates. Accordingly, the data rate of the transmitted data packets may be also adapted in line with the requirements of the respective data network.

Router 14 may further comprise a memory 14a for storing any kind of data in conjunction with the routing of the data packets. For example, router 14 may store data of available nodes or participants in a data network. For example, a related network address may be stored for each node/participants in the respective network. This information about the network address may be used for mapping the network address when routing data packets from one data network to another.

Furthermore, router 14 may store any other kind of relevant information such as data rates, error rates or the likes. For example, router 14 may store information about data rates, which can be achieved for specific communication links in the data network. Accordingly, router 14 may also store information regarding to error rates associated with specific communication links. This information may be used, for example, in order to determine an appropriate route for forwarding a data packet to a desired target node in a specific network.

In order to achieve a confidential and secure transmission of data through the connected networks, the data or the data packets may be encrypted. For this purpose, any appropriate encryption may be used. Thus, cryptographic device 13 of the mobile radio 1 may decrypt the received data packets at least in part. For example, cryptographic device 13 may decrypt the relevant information, which is required for the routing of the data packets. For example, information regarding the desired target node may be decrypted. Furthermore, it may be possible to change the encryption of a data packet when a data packet is received from one connected data network to another. For example, a data packet may be encrypted in a first data network based on a first encryption key. Accordingly, the data packet may be received by the mobile radio 1 and decrypted based on this first key. Subsequently, the data packet may be encrypted by a further encryption key or further encryption scheme and forwarded by the router to a further data network. In this way, the security of the encrypted data may be maintained when forwarding data packets from one data network to another by the mobile radio 1.

All the above described components of the mobile radio 1, in particular the radio transceiver 11, the data interface 12, the cryptographic device 13 and the router 14 may be arranged together in a common housing. In particular, the mobile radio may be a portable device. For example, mobile radio 1 may be a handheld device or a device, which may be attached to the equipment which is carried by a user. For example, mobile radio 1 may be attached to vest of a user or the like.

Figure 2 shows a schematic diagram of a mobile radio 1, which performs a data communication with two data networks 20 and 30. For example, mobile radio 1 may establish a data communication link with a base station 3 of a mobile communication network such as GSM, UMTS, LTE or 5G. Furthermore, mobile radio 1 may be connected to a further data network 20, such as a mesh network, for example a tactical mesh network or the like. However, any other kind of network, in particular an ad-hoc network or a mesh network may be possible, too. For example, mesh network 20 may comprise a network of multiple nodes/participants 2. The individual nodes 20 may directly communicate with each other and with mobile radio 1. In particular, the individual nodes 2 may move around, i.e. the special position of the individual nodes 2 may change over time. Furthermore, the individual nodes 2 may be switched on or off over time. Accordingly, mobile radio 1 may take into account this time variable configuration of a network 20 connected to mobile radio 1 when routing data packets. Furthermore, mobile radio 1 may also provide a radio communication for transmitting voice signals. Hence, mobile radio 1 provides a single device for radio communication of voice signals and data transmission over multiple networks.

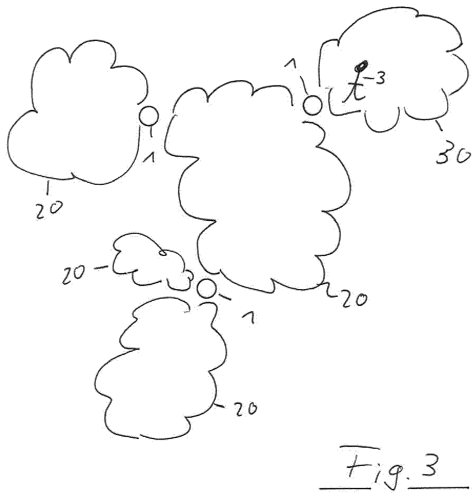

Figure 3 shows a further example of a network arrangement comprising multiple separate networks 20, 30 connected by mobile radios 1 according to an embodiment. As can be seen in Figure 3, a mobile radio 1 according to an embodiment may connect one or more mesh networks 20 such as tactical mesh networks with each other or with further networks 30. The individual mobile radios 1 may provide radio communications for transmitting voice signals. Further to this, data transmission, in particular packet based data transmission is provided by routing the individual data packets. Especially, data packets may be routed from one network 20, 30 to another network 20, 30. When routing network packets from one network 20, 30 to another network 20, 30, the mobile radio 1 provides a separate network address to each of the connected data networks. In this way, the individual networks may be separated from each other. As already mentioned above, the properties of the data packets may be adapted accordingly when routing data packets from one network 20, 30 to another network 20, 30. For example, the data rate may be adapted according to the properties of the respective network. Furthermore, the encryption may be also adapted for each connected network 20, 30. For this purpose, cryptographic device 13 may decrypt and encrypt the data packets accordingly.

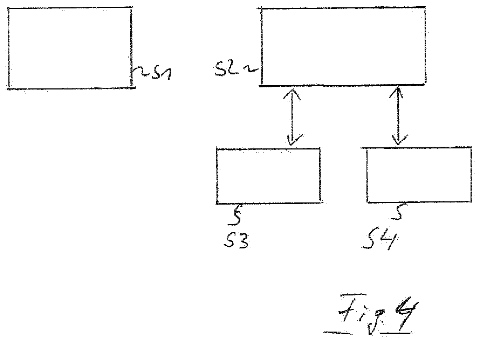

Figure 4 shows a flow diagram of a method for operating a mobile device 1 according to an embodiment. The method may comprise any kind of step or operation, which has been already described above in connection with the embodiments of the mobile device 1. Accordingly, mobile device 1, which has been described above may comprise elements or devices for performing the steps, which are described below in connection with the method.

In a step S1, a radio communication is established with one or more communication partners. The radio communication may be established by a radio transceiver 11. In a step S2, a data communication is established by a data interface 12. The data communication may receive data packets from a number of at least two data networks and also transmit data packets to the number of the at least two data networks 20, 30.

In a step S4, data packets may be routed according to the information of the data packets. In particular, the routing may provide different network addresses to each of the connected data networks.

In step S4, information of received encrypted data packets is decrypted. Furthermore, information of data packets to be transmitted may be encrypted. The decryption/encryption may be performed based on any appropriate encryption scheme. Furthermore, an appropriate encryption key with respect to the related data network may be used.

The routing may further adapt a data rate and/or a network address of the data packets routed from one data network to another data network.

The method may further store information of participants, data rates and/or error rates in at least one of the connected data networks. Furthermore, the routing may take into account the stored information when apply a routing of a data packet.

Summarizing, the present invention provides a mobile radio for tactical usage. The mobile radio may perform a radio communication for transmitting and receiving voice signals. Furthermore, the mobile radio may transmit and receive data packets of packet based data transmission. In particular, data packets may be routed between multiple connected different data networks. For this purpose, the encryption of the data packets may be adapted accordingly. Furthermore, the individual networks may be separated from each other. For example, separate network addresses may be provided to each of the connected networks.

## Claims

1. Mobile radio (1) for tactile usage, the mobile radio (1) comprising:
a radio transceiver (11) configured to transmit and receive radio communications with one or more communication partners;
a data interface (12) configured to receive data packets from a number of at least two data networks (20, 30) and to transmit data packets to the number of at least two data networks (20, 30);
a cryptographic device (13) configured to decrypt information of the received data packets and to encrypt information of data packets to be transmitted by the data interface (12); and
a router (14) configured to apply a routing of data packets which are received by the data interface (12),
wherein the router (40) is configured to apply the routing according to information of the data packets, and wherein the router (14) is available to each of the number of data networks (20, 30) by a different network address.

2. Mobile radio (1) according to claim 1, wherein the transceiver (11) and the router (14) are arranged in a common housing of the mobile radio (1).

3. Mobile radio (1) according to claim 1 or 2, wherein the mobile radio (1) is a handheld device.

4. Mobile radio (1) according to any of claims 1 to 3, wherein the data interface (12) is configured to establish a data transmission with at least one tactile network, in particular a tactical mesh network.

5. Mobile radio (1) according to any of claims 1 to 4, wherein the router (14) is configured to adapt a data rate and/or a network address of data packets routed from one data network to another data network of the number of data networks (20, 30).

6. Mobile radio (1) according to any of claims 1 to 5, wherein the data interface (12) is configured to establish a data transmission with at least one time variable network.

7. Mobile radio (1) according to any of claims 1 to 6, wherein the router (14) comprises a memory (14a) for storing information of participants, data rates and/or error rates of transmission in at least one of the connected number of data networks (20, 30), and the router (14) is configured to apply the routing based on the stored information.

8. Mobile radio (1) according to any of claims 1 to 7, wherein the transceiver (11) is configured to establish voice communication with one or more communication partners.

9. Mobile radio (1) according to any of claims 1 to 8, wherein the data interface (12) comprises a number of interface devices, each interface device being configured to establish a data communication with one of the number of data networks (20, 30).

10. Mobile radio (1) according to claim 9, wherein at least one of the interface devices is configured to be connected to the Internet.

11. Mobile radio (1) according to any of claims 1 to 10, wherein the data interface is configured to establish a wireless data connection with at least one of the number of data networks (20, 30).

12. Method for operating a mobile radio (1) for tactile usage, the method comprising:
establishing (S1) a radio communication with one or more communication partners by a radio transceiver (11),
establishing (S2) a data communication by a data interface (11) receiving data packets from a number of at least two data networks (20, 30) and transmitting data packets to the number of at least two data networks (20, 30);
routing (S3) data packets according to information of the data packets, wherein the routing provides a different network address to each of the number of data networks (20, 30), and
decrypting (S4) information of received data packets and encrypting data packets before routing the data packets.

13. Method according to claim 12, wherein the routing adapts a data rate and/or a network address of data packets routed from one data network to another data network of the number of data networks (20, 30).

14. Method according to claim 12 or 13, wherein at least one of the number of data networks (20, 30) is a time variable network, in particular a time variable tactile mesh network.

15. Method according to any of claims 12 to 14, comprising storing information of participants, data rates and/or error rates of transmission in at least one of the connected number of data networks,
wherein the routing (S3) is applied based on the stored information.
